(19) Europäisches Patentamt
European Patent Office
Office européen des brevets

(11) Veröffentlichungsnummer: **0 587 022 A2**

(12) # EUROPÄISCHE PATENTANMELDUNG

(21) Anmeldenummer: **93113901.8**

(51) Int. Cl.[5]: **C08G 63/183**, D01F 6/84

(22) Anmeldetag: **31.08.93**

(30) Priorität: **05.09.92 DE 4229759**

(43) Veröffentlichungstag der Anmeldung: **16.03.94 Patentblatt 94/11**

(84) Benannte Vertragsstaaten: **CH DE ES FR GB IE IT LI NL**

(71) Anmelder: **HOECHST AKTIENGESELLSCHAFT**
**Brüningstrasse 50**
**D-65929 Frankfurt am Main(DE)**

(72) Erfinder: **Heinrich, Bernd**
**Weideweg 11**
**D-86316 Friedberg(DE)**

(54) **Vollorientiertes Polyestergarn und Verfahren zu seiner Herstellung.**

(57) Beschrieben wird ein Spinnfähiger Polyester zur Herstellung von vollorientiertem Polyestergarn durch Schnellspinnen, auf der Basis von Polyethylenterephthalat, der durch Einkondensieren von aliphatischen Dicarbonsäuren modifiziert ist, und der ggf. noch Mengen unter 5 Gew% weiterer, für die Modifizierung von Polyethylenterephthalat üblicher Zusätze enthalten kann. Der Polyester ist dadurch gekennzeichnet, daß er aliphatische Dicarbonsäuren enthält, die insgesamt 4 bis 10 C-Atome haben, und die Menge der eingesetzten modifizierenden Dicarbonsäure so gewählt wird, daß

die Glasübergangstemperatur des Polyesters bei oder unter 70 ° C,
seine Rekristallisationstemperatur bei oder unter 180 ° C,
und seine Schmelzwärme, bestimmt durch DSC-Messung, bei oder unter 30 J/g liegt,

sowie durch Schnellspinnen daraus herstellbares Polyestergarn mit einer neuartigen Eigenschaftskombination aus hoher Festigkeit, hohem Modul und erhöhtem Schrumpfvermögen und eine Verfahren zur Herstellung dieses Garns.

EP 0 587 022 A2

Die vorliegende Erfindung betrifft ein schnellgesponnenes, vollorientiertes, hochfestes Polyestergarn, das ein für kritische Anwendungen ausreichendes Schrumpfvermögen aufweist, ein Herstellungsverfahren für dieses Garn sowie den für dieses Verfahren erforderlichen Polyesterrohstoff.

Aus der klassischen Faserherstellung durch Schmelzspinnen und getrenntes Verstrecken ist es bereits bekann, hochschrumpfende und auch tiefer anfärbende Polyesterfasern durch den Zusatz von Dicarbonsäuren oder Hydroxycarbonsäuren und Diolen zu erreichen, was z.B. aus dem Übersichtsartikel "Polyesterfasern der zweiten Generation" in Chemiefasern/Textilindustrie 22/74 (1972), Seite 388 ff. hervorgeht.
Diese Zusätze führen jedoch beim Spinnstrecken gegen Luftreibung im allgemeinen zu Garnen von so geringer Orientierung, daß sie nur für wenige textile Einsatzgebiete verwendbar sind.

Aus der DE-A- 21 17 659 ist es bereits bekannt, vollorientierte Polyestergarne durch Spinnstrecken herzustellen. Bei diesem bekannten Verfahren erfolgt die Herstellung des vollorientierten Polyestergarns durch Ausspinnen eines gegebenenfalls modifizierten Polyesters auf der Basis von Polyethylenterephthalat, Verfestigen der ersponnenen Filamente durch Abkühlung, Erwärmung der verfestigten Filamente auf eine Temperatur oberhalb der Glasübergangstemperatur, vorzugsweise auf 100 bis 150 °C, Abzug der Filamente mit einer so hohen Spinnabzugsgeschwindigkeit` daß gegen die Luftreibung der Filamente ihre vollständige Orientierung erfolgt, und Aufspulen.

Nach diesem Verfahren hergestellte Garne haben ein hohes Farbstoffaufnahmevermögen, hohe Festigkeit und ein steiles Kraft-Dehnungs-Diagramm, aber sie zeigen, wie die hochverstreckten Garne, ein relativ niedriges Schrumpfvermögen, das in der Regel unter 20 (cN/tex)·% liegt.
Das Schrumpfvermögen ist definiert als das Produkt aus der Schrumpfkraft in cN/tex und dem Hitzeschrumpf ($S_{200}$) in %, gemessen in Heißluft von 200 °C.
Für reguläre textile Ausrüstungsprozesse ist dieses Schrumpfvermögen zu gering. Auch für die Herstellung hochbelastbarer Textilien, wie z.B. für die Herstellung von Kraftfahrzeug-Sitzbezügen ist ein höheres Schrumpfvermögen dringend erwünscht, weil das Schrumpfen der textilen Fläche zu einer sehr vorteilhaften Verdichtung der Struktur führt.

Überraschenderweise wurde nun gefunden, daß nach dem aus der DE-A-21 17 659 bekannten Verfahren vollorientierte Polyestergarne hergestellt werden können, die bei Erhalt der gewünschten Eigenschaften, wie hohe Festigkeit, steiles K-D-Diagramm und hohes Farbstoffaufnahmevermögen zusätzlich ein erhöhtes Schrumpfvermögen von mindestens 30 (cN/tex)•% aufweisen wenn man als Polyesterrohstoff einen spinnfähigen Polyester auf der Basis von Polyethylenterephthalat einsetzt, der durch Einkondensieren aliphatischer Dicarbonsäuren modifiziert ist, und der ggf. noch Mengen unter 5 Gew% weiterer, für die Modifizierung von Polyethylenterephthalat üblicher Zusätze enthalten kann, und der dadurch gekennzeichnet ist, daß die modifizierenden aliphatischen Dicarbonsäuren insgesamt 4 bis 10 C-Atome haben, und deren Menge so gewählt wird, daß
die Glasübergangstemperatur des Polyesters bei oder unter 70 °C,
seine Rekristallisationstemperatur bei oder unter 180 °C,
und seine Schmelzwärme, bestimmt durch DSC-Messung, bei oder unter 30 J/g liegt.

Ein Gegenstand der vorliegenden Erfindung ist ein derartiger Polyesterrohstoff.

Modifizierende aliphatische Dicarbonsäuren im Sinne dieser Erfindung, die in den erfindungsgemäßen Polyester eingebaut werden können, haben insgesamt 4 bis 10 C-Atome. Beispiele dafür sind Glutarsäure, Adipinsäure, Pimelinsäure, Korksäure, Azelainsäure oder Sebacinsäure.
Bevorzugt sind erfindungsgemäße spinnfähige Polyester deren modifizierende Dicarbonsäure eine aliphatische Dicarbonsäure mit 5 bis 8 C-Atomen ist und insbesondere solche, deren modifizierende Dicarbonsäure Adipinsäure ist.

In der Regel werden die gewünschten Eigenschaften des erfindungsgemäßen Polyesterrohstoffs erhalten, wenn die modifizierende Dicarbonsäure in einer Menge von 4 bis 12 Gew.%, vorzugsweise in einer Menge von 5 bis 8 Gew.%, bezogen auf die Menge des Ethylenterephthalatgruppen-Anteils des Polyesters, vorhanden ist.

Die Ethylenterephthalatgruppen stellen die Hauptbausteine des erfindungsgemäßen Polyesters dar und entsprechen der Formel

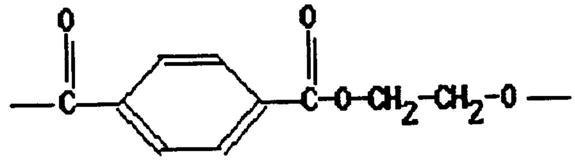

Der erfindungsgemäße, spezielle Polyesterrohstoff kann als übliche Modifizierungskomponenten, bezogen auf die gesamten Säurekomponenten 0,5 - 5,0 Gew.% Reste von aromatischen Dicarbonsäuren deren Carbonylbindungen gewinkelt stehen oder deren aromatische Kerne modifizierungswirksame Substituenten tragen, und/oder, bezogen auf die gesamten Diolkomponenten, 0,5 - 5,0 Gew.% Alkan- oder Cycloalkandiole mit 3 bis 10 C-Atomen, Di- oder Tri-ethylenglykol oder Polyethylenglykol mit einem Molgewicht bis 4000 enthalten.

Aromatische Dicarbonsäuren, die als übliche Modifizierungskomponenten in den erfindungsgemäßen Polyester eingebaut werden können, sind beispielsweise Isophthalsäure, Sulfoisophthalsäure, Methylterephthalsäure, Chlorterephthalsäure, Methylisophthalsäure, Chlorisophthalsäure, 3- oder 4-Carboxyphenylessigsäure, Naphtalin-1,3-, 1,6-, 2,5- oder -2,7-dicarbonsäure. Diole, die zur Modifizierung in die erfindungsgemäßen und erfindungsgemäß einzusetzenden Polyester eingebaut werden können, sind beispielsweise Propandiol, Butandiol, Pentandiol, Dimethyl-propandiol, Octandiol, Isooctandiol, Cyclohexandiol, Bis-Hydroxymethyl-cyclohexan, Diethylenglycol ( = Dihydroxy-diethylether), Triethylenglycol ( = Bis-(2-Hydroxyethoxy)-ethan), und Polyethylenglycol oder Polypropylenglycol mit mittleren Molekulargewichten bis ca. 4000. Sofern der erfindungsgemäße Polyesterrohstoff neben den erfindungsgemäß eingesetzten modifizierenden aliphatischen Dicarbonsäuren noch übliche Modifizierungskomponenten enthält, ist als übliche modifizierende Säurekomponente in der Praxis die Isophthalsäure, vorzugsweise in Mengenanteilen von 0,5 - 5 Gew.%, insbesondere 1 bis 2,5 Gew.%, besonders bevorzugt. Bevorzugte übliche modifizierende Diolkomponenten sind Diethylenglycol, das zweckmäßigerweise in einem Mengenanteil von 0,5 bis 3 Gew.%, insbesondere 1 bis 2 Gew.%, oder z.B. Bishydroxymethyl-cyclohexan, das zweckmäßigerweise in den oben angegebenen Mengenanteilen von 0,5 bis 5 Gew.%, vorzugsweise 1,5 bis 3 Gew.% in dem Polyethylenterephthalat enthalten ist.

Auch Kombinationen von modifizierenden Säure- und Diolkomponenten können in dem Polyethylenterephthalat enthalten sein, wie z.B. 0,5 bis 2,5 Gew.%, vorzugsweise 1 bis 2 Gew.% Isophthalsäure und 0,5 bis 2,5, vorzugsweise 1 bis 2 Gew.% Diethylenglycol.

Das mittlere Molekulargewicht des erfindungsgemäß einzusetzenden Polyesters entspricht einer Intrinsic-Viskosität, gemessen in Dichloressigsäure bei 25 ° C, von 0,5 - 0,9, vorzugsweise von 0,6 - 0,7 dl/g.

Besonders bevorzugt sind solche erfindungsgemäßen Polyesterrohstoffe die neben den modifizierenden Dicarbonsäuren übliche Modifizierungsmittel nur in Mengen unter 2 Gew.% enthalten und insbesondere solche, die neben den modifizierenden Dicarbonsäuren keine weiteren Modifizierungsmittel enthalten.

Ein Gegenstand der vorliegenden Erfindung ist auch ein vollorientiertes Polyestergarn, das aus diesem Polyesterrohstoff besteht und daraus durch Schnellspinnen nach dem aus der DE-A- 21 17 659 bekannten Verfahrensschema erhalten werden kann. Wie der erfindungsgemäße Polyesterrohstoff ist es durch Einkondensieren von aliphatischen Dicarbonsäuren modifiziert, kann ggf. noch Mengen unter 5 Gew% weiterer, für die Modifizierung von Polyethylenterephthalat üblicher Zusätze enthalten, und ist dadurch gekennzeichnet, daß in dem modifizierten Polyethylenterephthalat die aliphatische Dicarbonsäure insgesamt 4 bis 10 C-Atome hat, und die Menge der eingesetzten modifizierenden Dicarbonsäure so gewählt wird, daß
die Glasübergangstemperatur des Polyesters bei oder unter 70 ° C,
seine Rekristallisationstemperatur bei oder unter 180 ° C,
und seine Schmelzwärme, bestimmt durch DSC-Messung, bei oder unter 30 J/g liegt.

Das erfindungsgemäße vollorientierte Polyestergarn ist weiterhin dadurch ausgezeichnet, daß sein Schrumpfvermögen mindestens 30 (cN/tex)·% beträgt. Vorzugsweise liegt sein Schrumpfvermögen bei 35 bis 45 (cN/tex)·%Dabei ist es charakteristisch, daß die Schrumpfkraft durch die erfindungsgemäße Modifizierung nur relativ gerinfügig angehoben wird - er bleibt im Bereich von etwa 2 - 3 cN/tex -, daß aber der Thermoschrumpf um etwa 100%, z.B. von etwa 9% auf 18% steigt.

Die erfindungsgemäßen Polyester und Garne können neben den oben genannten, in das Polymer einkondensierten Modifizierungsmitteln auch noch übliche physikalische Zusätze, wie z.B. Pigmente und Mattierungsmittel enthalten. Sofern keine speziellen dekorativen Zwecke verfolgt werden sind jedoch solche Polyesterrohstoffe und daraus hergestellte Garne bevorzugt, die keine derartigen Zusätze enthalten.

Die erfindungsgemäßen vollorientierten Polyestergarne haben Doppelbrechungswerte im Bereich von 120 bis $145*10^{-3}$, vorzugsweise von 130 bis $145*10^{-3}$.
Die Doppelbrechung der Spinngarne wird in bekannter Weise mittels eines Polarisationsmikroskopes bestimmt.

Ein weiters charakteristisches Merkmal des erfindungsgemäßen vollorientierten Garns ist seine 10%-Streckspannung.
Dieser Wert gibt die feinheitsbezogene Streckkraft an, die bei einer Temperatur von 180°C zu einer Dehnung des Garns um 10% seiner Ausgangslänge erforderlich ist. Dieser Wert ist eine Strukturkenngröße des fertigen Garns und darf nicht verwechselt werden mit der Streckspannung, die beim Verstrecken von niederorientierten Filamenten im Rahmen der Produktion herkömmlicher Garne auftritt. Der Wert der 10%-Streckspannung wird in bekannter Weise mit bekannten Kraft/Dehnungsmeßgeräten ermittelt.

Die erfindungsgemäßen, vollorientierten Polyestergarne haben gegenüber schnellgesponnenen unmodifizierten Polyestergarnen ein wesentlich verbessertes Farbstoffaufnahmevermögen.
Diese Verbesserung findet ihren Ausdruck im Ergebnis der Farbunterschiedsmessung. Dabei ist unter "Farbunterschied" hier die Differenz des Helligkeitswertes $L^*$ des CIELAB-Farbenraumes zu verstehen (DIN 5033, Teil3), der an einer Standard-Färbung des erfindungsgemäßen Fasermaterials und des Vergleichsmaterials gemessen wird. Zweckmäßigerweise erfolgt die Messung mit einem Hunterlab Tristimulus Colorimeter, das diesen $L^*$ - Wert direkt anzeigt.

Die zur Messung erforderliche Standard-Färbung wird wie folgt vorbereitet:
Aus den zu vergleichenden Polyestermaterialien werden Garnproben mit annähernd gleichem Titer hergestellt und diese zu je einem Strickschlauch verstrickt. Der Strickschlauch wird gewogen und in der Färbemaschine zur Entfernung von Spinnavivage einmal warm gespült. Anschließend wird der Schlauch bei einem Flottenverhältnis von 1:30 bis 1:70 in einer Färbeflotte gefärbt, die 0,65 Gew.% (R)SAMARON-Marineblau HGS und 0,65 Gew.% eines Dispergiermittels ((R)DISPERSOGEN A), bezogen auf das Gewicht des Strickschlauches enthält. Es wird 35 Min. bei einer von 50°C auf 125°C gleichmäßig steigenden Temperatur und anschließend noch 30 Min. bei 125°C gefärbt.
Nach dem Färben wird der Schlauch bei 80°C einer reduktiven Nachbehandlung in einer 2 g/l Natriumhyposulfit enthaltenden Waschmittelflotte unterzogen, gründlich mit Wasser gespült und getrocknet.
Der so hergestellte gefärbte Strickschlauch wird in dem oben genannten Hunter-Lab-Colorimeter gemessen. Als "Farbunterschied" werden direkt die an diesem Gerät angezeigten Unterschiede in Skalenteilen angegeben.
Da es sich bei dieser Farbmessung um eine Remissionsmessung handelt, zeigt ein negativer Wert des Farbunterschieds eine höhere Farbtiefe, d.h. eine verbesserte Farbstoffaufnahme der gemessenen Probe an, ein positiver Wert eine geringere Farbtiefe, d.h. eine geringere Farbstoffaufnahme.

Ein weiterer Gegenstand der vorliegenden Erfindung ist das Verfahren zur Herstellung eines vollorientierten Polyestergarns durch Ausspinnen eines modifizierten Polyesters auf der Basis von Polyethylenterephthalat, der durch Einkondensieren von aliphatischen Dicarbonsäuren modifiziert ist, und der ggf. noch Mengen unter 5 Gew% weiterer, für die Modifizierung von Polyethylenterephthalat üblicher Zusätze enthalten kann, Verfestigen der ersponnenen Filamente durch Abkühlung, Erwärmung der verfestigten Filamente auf eine Temperatur oberhalb der Glasübergangstemperatur, vorzugsweise auf 100 bis 150°C, Abzug der Filamente mit einer so hohen Spinnabzugsgeschwindigkeit daß gegen die Luftreibung der Filamente ihre vollständige Orientierung erfolgt, und Aufspulen, wobei in dem eingesetzten, modifizierten Polyethylenterephthalat die modifizierende aliphatische Dicarbonsäure insgesamt 4 bis 10 C-Atome hat, und ihre Menge so gewählt wird, daß
die Glasübergangstemperatur des Polyesters bei oder unter 70°C,
seine Rekristallisationstemperatur bei oder unter 180°C,
und seine Schmelzwärme, bestimmt durch DSC-Messung, bei oder unter 30 J/g liegt.

Vorzugsweise wird bei dem erfindungsgemäßen Verfahren ein erfindungsgemäßer Polyester eingesetzt dessen modifizierende Dicarbonsäure eine aliphatische Dicarbonsäure mit 5 bis 8 C-Atomen, insbesondere Adipinsäure ist.

Vorzugsweise enthält der eingesetzte erfindungsgemäße Polyester die modifizierende Dicarbonsäure in einer Menge von 4 bis 12, insbesondere in einer Menge von 5 bis 8 Gew.%.

Die Spinnabzugsgeschwindigkeit wird bei der Durchführung des erfindungsgemäßen Verfahrens zweckmäßigerweise so eingestellt, daß sich eine auf den Endtiter bezogene Fadenzugkraft von unter 25 cN/50 dtex, vorzugsweise unter 23 cN/50 dtex, insbesondere unter 20 cN/50 dtex, ergibt. In der Regel wird diese Fadenzugkraft bei Abzugsgeschwindigkeiten über 3000 m/min insbesondere bei Abzugsgeschwindigkeiten von 3500 bis 5000 m/min erreicht.

Die folgenden Ausführungsbeispiele veranschaulichen die vorliegende Erfindung.

Beispiel 1 (Vergleich)

Ein Umesterungsreaktor wird mit 10 kg Dimethylterephthalat, 6 kg Ethylenglycol und 3 g Manganazetat • 4 $H_2O$ beschickt und die Mischung unter Rühren und unter Stickstoff als Schutzgas auf 140 °C erwärmt. Die Reaktionstemperatur wird im Verlauf von 4 Stdn. auf 230 °C gesteigert und das abgespaltene Methanol und der Ethylenglycol-Überschuß abdestilliert.
Anschließend wird das geschmolzene Reaktionsprodukt in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.
Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 225 Pa.s aufweist.

Der so hergestellte Polyester wird bei der in der folgenden Tabelle angegebenen Spinndüsentemperatur zu einem 20 Filamente aufweisenden Garn versponnen,das durch Luftanblasung abgekühlt und über einen Fallrohrheizer von 60 mm Innendurchmesser und 900 mm Länge, der die in der Tabelle angegebene Temperatur hat, mit der in der Tabelle angegebenen Spulgeschwindigkeit aufgewickelt, wobei die Anblasung und die Spritzmenge so eingestellt wird, daß sich nach dem Heizer die in der Tabelle angegebene Fadenzugkraft einstellt und ein Garntiter von 50 dtex f 20 erhalten wird.

Die Eigenschaften des erhaltenen Garns sind der Tabelle zu entnehmen.

Beispiel 2 (Vergleich)

Ein Polyester wird hergestellt wie im Beispiel 1 angegeben, mit dem einzigen Unterschied, daß die Kondensation bei 280 °C bis zu einer Schmelzviskosität von 262 Pa.s geführt wird.
Die Eigenschaften des erhaltenen Garns sind in der Tabelle aufgeführt.

Beispiel 3 (erfindungsgemäß)

a) Ein Umesterungsreaktor wird mit 10 kg Dimethylterephthalat, 715 g Adipinsäuredimethylester (entsprechend 6,0 Gew.% Adipinsäure, bezogen auf Dimethylterephthalat), 6,0 kg Ethylenglycol und 5 g Manganazetat • 4 $H_2O$ beschickt und die Mischung unter Rühren und unter Stickstoff als Schutzgas auf 140 °C erwärmt. Die Reaktionstemperatur wird im Verlauf von 4 Stdn. auf 230 °C gesteigert und das abgespaltene Methanol und der Ethylenglycol-Überschuß abdestilliert.
Anschließend wird das geschmolzene Reaktionsprodukt in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.
Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 174 Pa.s aufweist.
b) Der gleiche Polyester wird erhalten, wenn man wie folgt arbeitet:
Ein Umesterungsreaktor wird mit 10 kg Dimethylterephthalat, 6,0 kg Ethylenglycol und 5 g Manganazetat • 4 $H_2O$ beschickt und die Mischung unter Rühren und unter Stickstoff als Schutzgas auf 140 °C erwärmt. Die Reaktionstemperatur wird im Verlauf von 4 Stdn. auf 230 °C gesteigert und das abgespaltene Methanol abdestilliert.
Wenn die Methanolabspaltung beendet ist, werden in das geschmolzene Reaktionsprodukt 600 g Adipinsäure eingerührt und anschließend der Überschuß an Ethylenglycol abdestilliert.
Danach wird die Schmelze in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.
Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 174 Pa.s aufweist.
c) Der so hergestellte Polyester wird bei der in der folgenden Tabelle angegebenen Spinndüsentemperatur zu einem 20 Filamente aufweisenden Garn versponnen, das durch Luftanblasung abgekühlt und über einen Fallrohrheizer von 60 mm Innendurchmesser und 900 mm Länge, der die in der Tabelle

angegebene Temperatur hat, mit der in der Tabelle angegebenen Spulgeschwindigkeit aufgewickelt, wobei die Anblasung und die Spritzmenge so eingestellt wird, daß sich nach dem Heizer die in der Tabelle angegebene Fadenzugkraft einstellt und ein Garntiter von 50 dtex f 20 erhalten wird.

Die Eigenschaften des erhaltenen Garns sind der Tabelle zu entnehmen.

Beispiele 4 und 5

Diese Beispiele werden analog den Angaben im Beispiel 3a und 3c ausgeführt, wobei jedoch im Beispiel 4 die Menge des Adipinsäure-dimethylesters von 715 g auf 779 g und im Beispiel 5 auf 950 g erhöht wird. Die Kondensations-und Spinnbedingungen und die Eigenschaften der erhaltenen Garne sind der Tabelle zu entnehmen.

Beispiel 6

Ein Umesterungsreaktor wird mit 10 kg Dimethylterephthalat, 779 g Adipinsäuredimethylester (entsprechend 6,5 Gew.% Adipinsäure, bezogen auf Dimethyiterephthalat), 6,0 kg Ethylenglycol, 2g Pentaerythrit und 3 g Manganazetat • 4 $H_2O$ beschickt und die Mischung unter Rühren und unter Stickstoff als Schutzgas auf 140 °C erwärmt. Die Reaktionstemperatur wird im Verlauf von 4 Stdn. auf 230 °C gesteigert und das abgespaltene Methanol und der Ethylenglycol-Überschuß abdestilliert.

Anschließend wird das geschmolzene Reaktionsproduct in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.

Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 169 Pa.s aufweist.

Der so hergestellte Polyester wird bei der in der folgenden Tabelle angegebenen Spinndüsentemperatur zu einem 20 Filamente aufweisenden Garn versponnen,das durch Luftanblasung abgekühlt und über einen Fallrohrheizer von 60 mm Innendurchmesser und 900 mm Länge, der die in der Tabelle angegebene Temperatur hat, mit der in der Tabelle angegebenen Spulgeschwindigkeit aufgewickelt, wobei die Anblasung und die Spritzmenge so eingestellt wird, daß sich nach dem Heizer die in der Tabelle angegebene Fadenzugkraft einstellte und ein Garntiter von 50 dtex f 20 erhalten wird.

Die Eigenschaften des erhaltenen Garns sind der Tabelle zu entnehmen.

Beispiel 7

Ein Umesterungsreaktor wird mit 10 kg Dimethylterephthalat, 6,0 kg Ethylenglycol und 5 g Manganazetat • 4 $H_2O$ beschickt und die Mischung unter Rühren und unter Stickstoff als Schutzgas auf 140 °C erwärmt. Die Reaktionstemperatur wird im Verlauf von 4 Stdn. auf 230 °C gesteigert und das abgespaltene Methanol abdestilliert.

Anschließend werden in das geschmolzene Reaktionsprodukt 700 g Adipinsäure eingerührt und anschließend der Überschuß an Ethylenglycol abdestilliert.

Danach wird die Schmelze in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.

Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 138 Pa.s aufweist.

Der so hergestellte Polyester wird bei der in der folgenden Tabelle angegebenen Spinndüsentemperatur zu einem 20 Filamente aufweisenden Garn versponnen,das durch Luftanblasung abgekühlt und über einen Fallrohrheizer von 60 mm Innendurchmesser und 900 mm Länge, der die in der Tabelle angegebene Temperatur hat, mit der in der Tabelle angegebenen Spulgeschwindigkeit aufgewickelt, wobei die Anblasung und die Spritzmenge so eingestellt wird, daß sich nach dem Heizer die in der Tabelle angegebene Fadenzugkraft einstellte und ein Garntiter von 50 dtex f 20 erhalten wird.

Die Eigenschaften des erhaltenen Garns sind der Tabelle zu entnehmen.

Beispiel 8

Das folgende Ausführungsbeispiel veranschaulicht die Herstellung des auch im Beispiel 3 hergestellten Polyesters durch Direktveresterung:
Ein Veresterungsreaktor wird mit 8,55 kg Terephthalsäure, 600 g Adipinsäure, 4,0 kg Ethylenglycol beschickt und die Mischung unter Rühren und unter Stickstoff als Schutzgas unter einem Druck von 1,5 bar so erwärmt, daß das abgespaltene Wasser abdestilliert.
Wenn die Wasserabspaltung beendet ist wird das geschmolzene Reaktionsproduct in ein Polykondensationsgefäß überführt, mit 1 g $H_3PO_3$ und 6 g Antimontrioxid versetzt und unter Stickstoff bei 240 °C gerührt, wobei unter leichtem Vakuum Ethylenglycol abdestilliert wird.
Dann wird der Innendruck im Verlauf von einer Stunde auf 1,3 mbar gesenkt und dabei die Temperatur der Schmelze von 240 auf 270 °C erhöht. Im Verlauf einer weiteren halben Stunde wird dann die Temperatur auf 280 °C gesteigert und dabei solange weitergerührt, bis die Schmelze eine Schmelzviskosität, gemessen an einer Probe bei 295 °C, von 176 Pa.s aufwies.

Tabelle

| Verfahrens- oder Stoffmerkmal | Beispiel 1 | Beispiel 2 | Beispiel 3 | Beispiel 4 | Beispiel 5 | Beispiel 6 | Beispiel 7 |
|---|---|---|---|---|---|---|---|
| Zusätze | keinen | Diethylenglycol | Adipinsäure | Adipinsäure | Adipinsäure | Adipinsäure + Pentaerythrit | Adipinsäure |
| Zusatzmengen [Gew.%] (*) | - | 1,0 | 6,0 | 6,5 | 8,0 | 6,5 + 0,002 | 7,0 |
| Schmelzviskosität [Pa.s] (bei °C) | 225 (295) | 262 (295) | 174 (285) | 172 (280) | 167 (285) | 169 (280) | 138 (280) |
| Spinndüsentemp. °C | 278 | 285 | 276 | 271 | 276 | 271 | 271 |
| Heizertemperatur °C | 200 | 200 | 210 | 210 | 210 | 210 | 210 |
| Spulgeschwindigkeit [m/min] | 4200 | 4200 | 4600 | 4800 | 4600 | 4800 | 4800 |
| Fadenzugkraft nach d. Heizer [cN] | 20 | 19 | 20 | 22,5 | 20 | 24 | 23 |
| Glasübergangstemperatur [°C] | 78,5 | 79 | 69 | 61 | 61 | 60 | 59 |
| Rekristallisationstemperatur [°C] | 182 | 187 | 170 | 170 | 167 | 170 | 168 |

**Tabelle, Fortsetzung**

| Verfahrens- oder Stoffmerkmal | Beispiel 1 | Beispiel 2 | Beispiel 3 | Beispiel 4 | Beispiel 5 | Beispiel 6 | Beispiel 7 |
|---|---|---|---|---|---|---|---|
| Schmelzwärme [J/g] | 35,8 | 42 | 28 | 28 | 25 | 22 | 27 |
| Reißfestigkeit [cN/tex] | 37,5 | 39 | 38,5 | 39,5 | 38 | 35 | 39 |
| Reißdehnung [%] | 44,7 | 41,5 | 45 | 44 | 47 | 49 | 43,5 |
| Bezugsdehnung bei 28 cN/tex [%] | 24,5 | 18,5 | 22 | 18 | 23,5 | 29 | 19 |
| 100°C / 200°C - Schrumpf [%] | 6/9,1 | 6,2/9,8 | 6,5/15,3 | --/16,5 | 7/19 | --/15,5 | --/16,3 |
| Dichte g/cm$^3$ | 1,3743 | 1,3814 | 1,3695 | 1,3715 | 1,3681 | 1,3712 | 1,3731 |
| Kristallisationsgrad [%] | 37 | 42,8 | 33 | 34,7 | 31,8 | 34,5 | 36 |
| 10%-Streckspannung [cN/tex] | 9,16 | 8,67 | 8,9 | 8,2 | 8,2 | 8,0 | 8,3 |
| Doppelbrechung x10$^3$ | 140 | 136 | 141 | 131 | 137 | 122 | 133 |
| Schrumpfspannung [cN/tex] | 2,15 | 2,0 | 2,2 | 2,65 | 2,2 | 2,6 | 2,75 |
| Schrumpfvermögen [(cN/tex)·%] | 19,56 | 19,6 | 33,66 | 43,7 | 41,8 | 40,3 | 44,8 |

**Tabelle, Fortsetzung**

| Verfahrens- oder stoffmerkmal | Beispiel 1 | Beispiel 2 | Beispiel 3 | Beispiel 4 | Beispiel 5 | Beispiel 6 | Beispiel 7 |
|---|---|---|---|---|---|---|---|
| Farbunterschied zu Beispiel 1 (Vergleich) | --- | --- | -11 | | -12 | -12 | -12 |
| | | | | | | | |
| | | | | | | | |

(*) Zusatzmengen bezogen auf Dimethylterephthalat.

Die Daten der obigen Tabelle sind direkt miteinander vergleichbar, da die Spinnbedingungen Düsentemperatur, Heizertemperatur, Spulgeschwindigkeit und Fadenzugkraft materialoptimiert wirdn, d.h. so eingestellt wird, daß sich für das jeweilige Polyestermaterial die optimalen Filamentdaten ergaben.

## Patentansprüche

1. Spinnfähiger Polyester zur Herstellung von vollorientiertem Polyestergarn durch Schnellspinnen, auf der Basis von Polyethylenterephthalat, der durch Einkondensieren von aliphatischen Dicarbonsäuren modifiziert ist, und der ggf. noch Mengen unter 5 Gew% weiterer, für die Modifizierung von Polyethylenterephthalat üblicher Zusätze enthalten kann, dadurch gekennzeichnet, daß er modifizierende aliphatische Dicarbonsäuren einkondensiert enthält, die insgesamt 4 bis 10 C-Atome haben, und deren Menge so gewählt wird, daß
die Glasübergangstemperatur des Polyesters bei oder unter 70 ° C,
seine Rekristallisationstemperatur bei oder unter 180 ° C,
und seine Schmelzwärme, bestimmt durch DSC-Messung, bei oder unter 30 J/g liegt.

**2.** Spinnfähiger Polyester gemäß Anspruch 1, dadurch gekennzeichnet, daß die modifizierende Dicarbonsäure eine aliphatische Dicarbonsäure mit 5 bis 8 C-Atomen ist.

**3.** Spinnfähiger Polyester gemäß mindestens einem der Ansprüche 1 und 2, dadurch gekennzeichnet, daß die modifizierende Dicarbonsäure Adipinsäure ist.

**4.** Spinnfähiger Polyester gemäß mindestens einem der Ansprüche 1 bis 3, dadurch gekennzeichnet, daß die modifizierende Dicarbonsäure in einer Menge von 4 bis 12 Gew.% vorhanden ist.

**5.** Spinnfähiger Polyester gemäß mindestens einem der Ansprüche 1 bis 4, dadurch gekennzeichnet, daß die modifizierende Dicarbonsäure in einer Menge von 5 bis 8 Gew.% vorhanden ist.

**6.** Vollorientiertes Polyestergarn, herstellbar durch Schnellspinnen, auf der Basis von Polyethylenterephthalat, das durch Einkondensieren von aliphatischen Dicarbonsäuren modifiziert ist, und das ggf. noch Mengen unter 5 Gew% weiterer, für die Modifizierung von Polyethylenterephthalat üblicher Zusätze enthalten kann, dadurch gekennzeichnet, daß das modifizierte Polyethylenterephthalat modifizierende aliphatische Dicarbonsäuren einkondensiert enthält, die insgesamt 4 bis 10 C-Atome haben, und deren Menge so gewählt wird, daß
die Glasübergangstemperatur des Polyesters bei oder unter 70 ° C,
seine Rekristallisationstemperatur bei oder unter 180 ° C,
und seine Schmelzwärme, bestimmt durch DSC-Messung, bei oder unter 30 J/g liegt.

**7.** Vollorientiertes Polyestergarn gemäß Anspruch 6, dadurch gekennzeichnet, daß die modifizierende Dicarbonsäure eine aliphatische Dicarbonsäure mit 5 bis 8 C-Atomen ist.

**8.** Vollorientiertes Polyestergarn gemäß mindestens einem der Ansprüche 6 und 7, dadurch gekennzeichnet, daß die modifizierende Dicarbonsäure Adipinsäure ist.

**9.** Vollorientiertes Polyestergarn gemäß mindestens einem der Ansprüche 6 bis 8, dadurch gekennzeichnet, daß die modifizierende Dicarbonsäure in einer Menge von 4 bis 12 Gew.% vorhanden ist.

**10.** Vollorientiertes Polyestergarn gemäß mindestens einem der Ansprüche 6 bis 9, dadurch gekennzeichnet, daß die modifizierende Dicarbonsäure in einer Menge von 5 bis 8 Gew.% vorhanden ist.

**11.** Vollorientiertes Polyestergarn gemäß mindestens einem der Ansprüche 6 bis 10, dadurch gekennzeichnet, daß sein Schrumpfvermögen mindestens 30 cN/tex.% beträgt.

**12.** Verfahren zur Herstellung eines vollorientierten Polyestergarns durch Ausspinnen eines modifizierten Polyesters auf der Basis von Polyethylenterephthalat, das durch Einkondensieren von aliphatischen Dicarbonsäuren modifiziert ist, und das ggf. noch Mengen unter 5 Gew% weiterer, für die Modifizierung von Polyethylenterephalat üblicher Zusätze enthalten kann, Verfestigen der ersponnenen Filamente durch Abkühlung, Erwärmung der verfestigten Filamente auf eine Temperatur oberhalb der Glasübergangstemperatur, vorzugsweise auf 100 bis 150 ° C, Abzug der Filamente mit einer so hohen Spinnabzugsgeschwindigkeit daß gegen die Luftreibung der Filamente ihre vollständige Orientierung erfolgt, und Aufspulen, dadurch gekennzeichnet, daß das modifizierte Polyethylenterephthalat modifizierende aliphatische Dicarbonsäuren einkondensiert enthält, die insgesamt 4 bis 10 C-Atome haben, und deren Menge so gewählt wird, daß
die Glasübergangstemperatur des Polyesters bei oder unter 70 ° C,
seine Rekristallisationstemperatur bei oder unter 180 ° C,
und seine Schmelzwärme, bestimmt durch DSC-Messung, bei oder unter 30 J/g liegt.

**13.** Verfahren zur Herstellung eines vollorientierten Polyestergarns gemäß Anspruch 12, dadurch gekennzeichnet, daß die modifizierende Dicarbonsäure eine aliphatische Dicarbonsäure mit 5 bis 8 C-Atomen ist.

**14.** Verfahren zur Herstellung eines vollorientierten Polyestergarns gemäß mindestens einem der Ansprüche 12 und 13, dadurch gekennzeichnet, daß die modifizierende Dicarbonsäure Adipinsäure ist.

**15.** Verfahren zur Herstellung eines vollorientierten Polyestergarns gemäß mindestens einem der Ansprüche 12 bis 14, dadurch gekennzeichnet, daß die modifizierende Dicarbonsäure in einer Menge von 4 bis 12 Gew.% vorhanden ist.

**16.** Verfahren zur Herstellung eines vollorientierten Polyestergarns gemäß mindestens einem der Ansprüche 12 bis 15, dadurch gekennzeichnet, daß die modifizierende Dicarbonsäure in einer Menge von 5 bis 8 Gew.% vorhanden ist.